# EUROPÄISCHE PATENTANMELDUNG

(11) **EP 1 477 437 A2**
(43) Veröffentlichungstag der Anmeldung: **17.11.2004**
(21) Anmeldenummer: 04007438.7
(22) Anmeldetag: 26.03.2004
(51) Int. Cl.: B65G 21/06, B65G 21/00, B65G 21/22, B65G 13/04, B65G 13/07, B65G 39/02, B65G 15/12

(54) **Baukastensystem für einen Förderer zum Längs- oder Querfördern von Stückgutträgern**

(30) Priorität: 14.05.2003 DE 10321736
(71) Anmelder: SIEMENS AKTIENGESELLSCHAFT, 80333 München (DE)
(72) Erfinder: Spoeler, Hans-Gerd, 46325 Borken (DE)

(57) **Zusammenfassung**

Baukastensystem für einen Förderer (1) zum Längs- oder Querfördern von Stückgutträgern, mit seitlichen Längsträgern (4,5), mit diese verbindenden Querrahmenelementen (6) und mit angetriebenen lastabtragenden Fördermitteln (7,10) für die Stückgutträger, wobei der die Fördermittel aufnehmende Längsträger jeweils ein lösbar mit dem Querrahmenelement (6) verbindbares verwindungssteifes Aluminium- oder Kunststoff-Hohlprofil (4,5) ist, dass zur wahlweisen Aufnahme von angetriebenen Tragrollen (7) oder von einlegbaren Gleitblechen (11) für einen Traggurt (10) ausgebildet ist.

## Beschreibung

Die Erfindung betrifft ein Baukastensystem für einen Förderer zum Längs- oder Querfördern von Stückgutträgern, wie Paletten, Skids oder dgl. mit seitlichen Längsträgern, mit die Längsträger verbindenden Querrahmenelementen mit Stützfüßen und mit angetriebenen lastabtragenden Fördermitteln für die Stückgutträger.

Zum Fördern von Stückgutträgern sind unterschiedliche Systeme bekannt; im wesentlichen unterscheidet man rollende Abtragung der Lastträger auf Rollenförderern und gleitende Abtragung, wobei der Lastträger auf Tragelementen aufliegt, die gleitend auf einem Untergrund abgetragen werden. Die Lastträger für gleitende Abtragung kann man grob unterscheiden in Traggurte und Ketten. Traggurt- oder Kettenförderer sind besonders geeignet, um einen sog. Quertransport von Paletten zu ermöglichen, der häufig erforderlich ist und für den Rollenförderer wegen des zu überbrückenden Rollenabstandes ungeeignet sind. Für die Herstellung von Förderern der vorbeschriebenen Art entsteht ein erheblicher Aufwand, dadurch, dass praktisch beide Förderprinzipien nebeneinander zur Verfügung gestellt werden müssen, was ein sehr großes Sortiment von Bauteilen mit entsprechender Lager- und Ersatzteilhaltung bedeutet und was dadurch letztlich den Förderer deutlich verteuert. Individuelle Kundenlösungen und spezielle Konstruktionen verteuern grundsätzlich durch hohe Herstellungs- und Konstruktionskosten, auch entstehen Nachteile für.den Kunden durch lange Lieferzeiten.

Ziel der vorliegenden Erfindung ist es deshalb, ein vereinfachendes Baukastensystem für einen Förderer der eingangs beschriebenen Art zu schaffen, das gegenüber bisherigen Lösungen hinsichtlich Herstellkosten, Montagekosten, Prozesskosten und Lieferzeit für den Förderer deutlich verbessert ist.

Zur Lösung der Aufgabe wird erfindungsgemäß vorgeschlagen, dass bei einem gattungsgemäßen Förderer der die Fördermittel aufnehmende Längsträger jeweils ein lösbar mit dem Querrahmenelement verbindbares verbindungssteifes Aluminiumoder Kunststoff-Hohlprofil ist, das zur wahlweisen Aufnahme von angetriebenen Tragrollen oder von einlegbaren Gleitblechen für einen Traggurt ausgebildet ist. Kern der vorliegenden Erfindung ist das verwindungssteife Aluminiumoder Kunststoff-Hohlprofil, das sowohl für Tragrollen als auch für Traggurte gestaltet ist. Damit wird es möglich, mit ein- und demselben Längsträger des Förderers beide Förderprinzipien durchzuführen, nämlich sowohl das Längs- als auch das Querfördern von Stückgutträgern. Die universell verwendbaren Längsträger werden lediglich durch das Einsetzen entweder von Tragrollen oder das Einlegen von Gleitblechen dem jeweils gewünschten Zweck angepasst und an die Querrahmenelemente angeschraubt. Der Förderer kann so wie bei einem Baukasten zusammengestellt werden, die Zahl der verwendeten Bauteile wird auf ein Minimum reduziert, die Montage des Förderers ist sehr einfach.

In einer günstigen Ausgestaltung der Erfindung ist vorgesehen, dass das Aluminium- oder Kunststoff-Hohlprofil an einer seiner Längsseiten zur Aufnahme der Tragrollen offen ist und auf der gegenüberliegenden Seite zur Bildung einer Auflage für das Gleitblech weitgehend geschlossen ist, und dass durch Drehung des Aluminium- oder Kunststoff-Hohlprofils um 180° um seine Längsachse die für den jeweils erforderlichen Zweck benötigte Seite in Gebrauchslage mit dem Querrahmenelement verbindbar ist.

Vorzugsweise ist das Aluminium- oder Kunststoff-Hohlprofil im Querschnitt an zwei gegenüberliegenden Längsseiten so geformt, dass es auf der einen Längsseite die Tragrollen aufnehmen und auf der gegenüberliegenden Seite die Gleitbleche für einen Traggurt abstützen kann. Durch einfaches Drehen des Aluminium- oder Kunststoff-Hohlprofils um 180° um seine Längsachse und Anschrauben an die Querrahmenelemente kann in einfacher Weise mit ein- und demselben Aluminium- oder Kunststoff-Hohlprofil ein Rollenförderer oder ein Traggurtförderer gebildet werden; besondere unterschiedliche Profile sind nicht erforderlich.

Vorteilhafterweise ist vorgesehen, dass das Aluminium- oder Kunststoff-Hohlprofil im Querschnitt H-förmig ausgebildet ist, wobei die Tragrollen zwischen den beiden Schenkeln des H-förmigen Querschnitts gelagert sind und die gegenüberliegenden Schenkel des H-förmigen Querschnitts in ihrem Endbereich durch ein Querschott verschlossen sind, das die Auflage für das Gleitblech bildet, wobei das Aluminiumoder Kunststoff-Hohlprofil symmetrisch ausgebildet ist. Die symmetrische Ausbildung ist sinnvollerweise erforderlich, um die Befestigung des Aluminium- oder Kunststoff-Hohlprofils an den Längsträgern zu vereinfachen. So können einheitliche Befestigungspunkte für beide Förderprinzipien vorgesehen werden, die ein Drehen des Profils um seine Längsachse und Befestigen ermöglichen.

Der H-förmige Querschnitt eignet sich besonders gut für die Lagerung der Tragrollen zwischen den beiden Schenkeln dieses H-Profils. Ein Querschott zwischen den Schenkeln des H-Profils auf der gegenüberliegenden Seite bietet eine günstige Auflage für das Gleitblech, auf dem der Traggurt aufliegt bzw. abgetragen wird. Gleichzeitig wird durch den Profilquerschnitt eine hohe Festigkeit in Querrichtung erreicht, die zusätzlich verstärkt werden kann, wenn nach einem weiteren Merkmal der Erfindung der Bereich zwischen dem Querschott und dem Steg des im Querschnitt H-förmigen Aluminium- oder Kunststoff-Hohlprofils eine zusätzliche Querversteifung enthält.

Die Querversteifung kann nach einem günstigen Merkmal der Erfindung auch durch ein in Längsrichtung des Aluminium- oder Kunststoff-Hohlprofils verlaufendes Rohrprofil gebildet werden, gegen das sich die Innenseiten der Schenkel des Aluprofils abstützen. Rohrprofile haben bekanntlich eine hohe Stabilität in Querrichtung; wird ein solche Rohrprofil in das Aluminium- oder Kunststoff-Hohlprofil mit eingeformt, so ergibt sich eine für den vorgesehenen Zweck hohe Stabilität bei geringem Gewicht des Aluminium- oder Kunststoffmaterials.

Es ist besonders günstig, wenn das Aluminium- oder Kunststoff-Hohlprofil und dessen Querversteifungen aus einem hochgenauen Strangpressprofil gebildet werden. Aluminiumoder Kunststoff-Hohlprofile lassen sich im Strangpressverfahren sehr formgenau herstellen, wobei die Formgebung nahezu unbeschränkt ist. Dies macht sich die vorliegende Erfindung zu nutze.

Um die Aluminium- oder Kunststoff-Hohlprofile mit dem Querrahmenelement verbinden zu können, ist nach einem weiteren Merkmal der Erfindung vorgesehen, dass mindestens in den querversteiften, sich gegenüberliegenden Seitenbereichen des Aluminium- oder Kunststoff-Hohlprofils T-Nuten für Befestigungsmittel vorgesehen sind. Diese T-Nuten können selbstverständlich auch für andere Bauteile verwendet werden, die am Förderer zu befestigen sind, z.B. Initiatoren oder Sensoren.

Als besonders günstig wird es angesehen, wenn erfindungsgemäß das Aluminium- oder Kunststoff-Hohlprofil als Rollenleiste mit den eingesetzten Tragrollen vorgefertigt montierbar ist. Auf diese Weise wird die Montage des Förderers, auch vor Ort sehr vereinfacht, die Rollenleisten können dem Verwendungszweck entsprechend vorbereitet sein und bedarfsgerecht schnell und einfach mit dem Querrahmenelement verbunden werden.

In einer Ausgestaltung der Erfindung ist vorgesehen, dass die Rollenleiste im Bereich der Tragrollen mit einer Abdeckplatte verschließbar ist, die mit von Segmenten der Tragrollen durchdringbaren Ausnehmungen versehen ist. Diese Platte stellt sicher, dass die Bereiche zwischen den Rollen geschützt sind, beispielsweise vor unbeabsichtigtem Hineingreifen oder vor dem Hineinfallen von irgendwelchen Gegenständen.

Die Tragrollen der Rollenleiste können nach einem weiteren Merkmal der Erfindung aus einem abgelängten, rohrförmig ausgebildeten Alu-Strangpressprofil gebildet sein, in das beidseitig Naben zur Aufnahme der Tragrollenlagerung einpressbar sind. Die Herstellung der Tragrollen wird durch diesen Vorschlag erheblich vereinfacht. Rollen werden in der erforderlichen Rollenbreite von dem rohrförmigen Strangpressprofil abgetrennt. Die Naben werden in das Rohr rechts und links eingepresst und bilden das Festlager für die Achsen der Rollen. Gleichzeitig kann nach einem ausgestalteten Merkmal der Erfindung vorgesehen sein, an den Naben Spurkränze zur Führung der Stückgutträger anzuformen.

Zum Antrieb der Tragrollen ist es denkbar, die Tragrollen zentral umlaufend oder, geschützt durch den Obergurt des Alu-Strangpressprofils seitlich vesetzt, mit einer Nut zu versehen, in die ein für alle Tragrollen einer Rollenleiste gemeinsamer Transmissionsriemen einlegbar ist. Vorzugsweise ist dieser Transmissionsriemen ein Zahnriemen und die Tragrollen sind im Abtragbereich des Transmissionsriemens mit entsprechend gezahnter Umfangsfläche versehen. Auf diese Weise lässt sich ein hohes Antriebsmoment übertragen.

Es ist nach einer anderen Ausgestaltung der Erfindung aber auch denkbar, dass um alle Tragrollen einer Rollenleiste ein Transportriemen umläuft, der, auf den Tragrollen aufliegend, den Stückgutträger fördert. Diese Lösung eignet sind besonders für den Quertransport von Paletten, wenn die Verwendung von gleitend abgetragenen Traggurten wegen hoher Lasten nicht möglich ist.

Die Querrahmenelemente, an die die Längsträger anschraubbar sind, sind nach einem anderen Merkmal der Erfindung aus einem abgewinkelten Kantblech mit angeformten Stützbeinen geformt. Dadurch wird ein sehr einfaches und preiswert herzustellendes Element geschaffen, das ebenfalls baukastenartig mit den Längsträgern verschraubbar ist und mit dem Förderer vorgefertigt geliefert werden kann. In die Stützbeine der Querrahmenelemente sind nach einem weiteren Merkmal der Erfindung bodenseitig höhenjustierbare Stützfüße eingebracht, mit denen der Förderer auf dem Boden ausgerichtet werden kann.

Die erfindungsgemäßen Querrahmenelemente sind in Förderrichtung der Stückgutträger mit Ausnehmungen versehen, in die längs des Förderers verlaufende Kabelkanäle einsetzbar sind. Auch diese Kabelkanäle sind baukastenartig in die Querrahmenelemente einsetzbar und bestehen aus vorgefertigten Teilen. Die Verlegung der Kabel wird dadurch vereinfacht, die Zugänglichkeit wird erleichtert.

Darüber hinaus kann vorgesehen sein, an die Querrahmenelemente Verlagerungen für Steuerungs-Boxen anzuformen, diese Boxen werden dort fixiert und mit dem Antrieb der Förderer verdrahtet.

Eine besonders günstige Lösung zur Erleichterung des Transports und zur Verringerung des Transportvolumens sieht vor, dass die Querrahmenelemente der vorzugsweise kurzen Fördererabschnitte um je eine der Befestigungsschrauben um 90° in die Längsebene der beidseitigen Aluminium- oder Kunststoff-Hohlprofile verschwenkbar sind und nach Zurückschwenken und Festschrauben der Aluminium- oder Kunststoff-Hohlprofile an den Querrahmenelementen mit mindestens einer weitern Befestigungsschraube in der Betriebslage festlegbar sind. Die Stützbeine der Querrahmenelemente werden so zum Transport angeklappbar, so dass die Bauhöhe der Förderer praktisch auf die Höhe der Aluminium- oder Kunststoff-Hohlprofile beschränkt ist. Ohne großen Montageaufwand lassen sich die Stützbeine der Querrahmenelemente um 90° zum Förderer in die Betriebsstellung verschwenken, wo sie mit wenigen Handgriffen fixiert werden.

Der erfindungsgemäße Förderer ist modular aufgebaut, wobei jeder Förderer aus mindesten zwei Aluminium- oder Kunststoff-Hohlprofilen mit Gleitblechen oder Rollenleisten, mindestens einem Querrahmenelement, mindestens einem Antriebsmodul und mindestens zwei Transport- oder Transmissionsriemen besteht. Hieraus wird deutlich, dass der neuartige Förderer mit extrem wenigen Bauteilen auskommt, von denen die wesentlichen Bauteile Baukastenteile sind, die universell für unterschiedliche Förderprinzipien verwendbar sind. Alle Bauteile können in der Werkstatt vorgefertigt und zu einem Förderer montiert werden, der dann praktisch einsatzfertig an seinen Einsatzort gebracht und mit wenigen Handgriffen dort aufgebaut werden kann. Dadurch ergeben sich sehr geringe Montagezeiten, die Fertigung wird deutlich vereinfacht, der Transport verbilligt. All diese Maßnahmen ergeben einen sehr kostengünstigen Förderer.

Als Antrieb für die Fördermittel ist nach einem Merkmal der Erfindung ein Integralantrieb vorgesehen, d. h. ein Direktantrieb der Transport- oder Transmissionsriemen. Vorzugsweise ist dieser Integralantrieb ein Trommelmotor, der an der letzten Rolle des Förderers installiert ist.

Um den Transport- oder Transmissionsriemen des Förderers stets unter Spannung zu halten, was erforderlich ist, um das nötige Antriebsmoment zu übertragen, ist nach einem günstigen Merkmal der Erfindung vorgesehen, eine Umlenkrolle für den Transport- oder Transmissionsriemen am Ende des Aluminium- öder Kunststoff-Hohlprofiles unterhalb der Transportebene anzuordnen und durch Verschwenken oder Verschieben in Förderrichtung zum Spannen des Transport- oder Transmissionsriemen zu verwenden.

Schließlich ist erfindungsgemäß vorgesehen, dass die Rollenleisten der Aluminium- oder Kunststoff-Hohlprofile mit, abhängig von den unterschiedlichen Verwendungszwecken, in unterschiedlichen Achsabständen positionierten Tragrollen vorgefertigt sind. Beispielsweise wird für die Förderung von Skids ein anderer (größerer) Achsabstand für Tragrollen benötigt, als das bei der Längsförderung von Paletten üblich ist. Entsprechend vorgefertigte Leisten werden je nach Bedarf an die Querrahmenelemente angeschraubt.

Zusammenfassend weist die Erfindung eine Reihe von Vorteilen auf. Sie ersetzt die bisher üblichen Rollen oder Wellen durch eine Tragrollenleiste, die überhaupt erst das neuartige Baukastensystem ermöglicht. Der wesentliche Bestandteil dieses Systems ist das Aluminium- oder Kunststoff-Hohlprofil, das vorzugsweise im Strangpressverfahren hergestellt wird. Dieses Profil ist so gestaltet, dass durch eine 180° Drehung wahlweise Abstützflächen oder Rollen zur Wirkung kommen, die Querrahmenelemente sind einfach preiswert und funktionell hergestellt, leicht zu montieren und während des Transportes wegzuklappen, um Transportraum zu sparen. Das einfache Baukastensystem schafft einen preiswerten und wirtschaftlichen Fördere, der auch dem Betreiber erhebliche Vorteile bringt, nämlich Preisvorteile und technische Vorteile. So ermöglicht der erfindungsgemäße Förderer beispielsweise den schnellen Wechsel von Traggurt und Rollenleiste ohne die Demontage des kompletten Förderers.

Ein Ausführungsbeispiel der Erfindung ist in der Zeichnung dargestellt und wird nachfolgend beschrieben. Es zeigt:
- Figur 1: den im Baukastensystem erstellten erfindungsgemäßen Förderer in perspektivischer Ansicht,
- Figur 2: einen Querschnitt durch das erfindungsgemäße Aluminium- oder Kunststoff-Hohlprofil mit gleitend abgetragenem Traggurt (schematisch),
- Figur 3: einen Querschnitt durch das erfindungsgemäße Aluminium- oder Kunststoff-Hohlprofil um 180° gegenüber der Fig. 3 gedreht,
- Figur 4: die Versteifung des Alu-Hohlprofils durch einen in Längsrichtung verlaufenden Rohrprofilquerschnitt,
- Figur 5: das Alu-Hohlprofil nach Fig. 4, um 180°gedreht, mit Tragrollen und Transmissionsriemen,
- Figur 6: einen Querschnitt durch den erfindungsgemäßen Förderer,
- Figur 7a - c: die erfindungsgemäßen Querrahmenteile in perspektivischer Ansicht,
- Figur 8a: den Förderer in Transportstellung,
- Figur 8b: den Förderer in Arbeitsstellung,
- Figur 9a: eine vergrößerte Darstellung des Integralantriebs als Trommelmotor,
- Figur 9b und 9c: eine Draufsicht und eine Seitenansicht des Aluminium- oder Kunststoff-Hohlprofils und
- Figur 10: das vorgefertigte Aluminium- oder Kunststoff-Hohlprofil mit den Lagerungen der Tragrollenachsen.

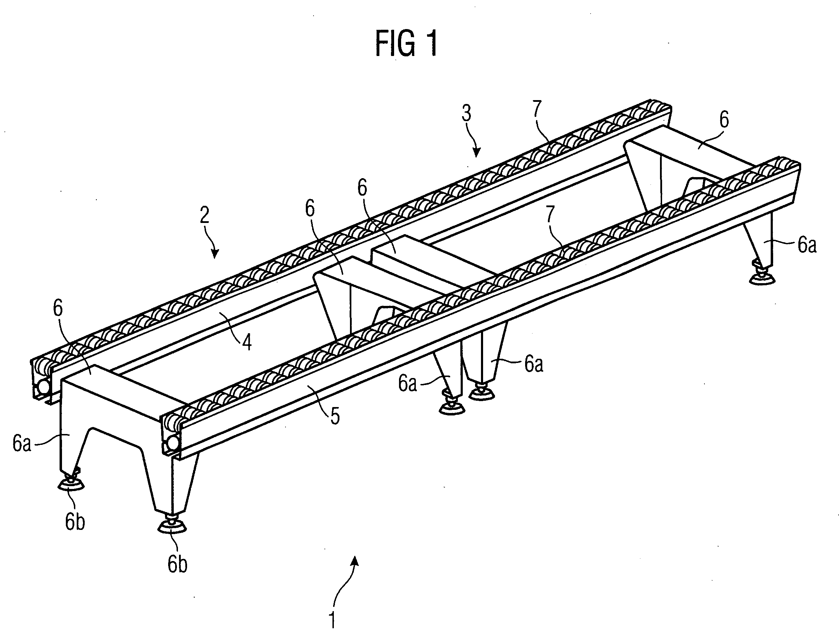

In Figur 1 ist insgesamt mit 1 ein Förderer bezeichnet, der aus zwei Fördererabschnitten 2 und 3 aus dem erfindungsgemäßen Baukastensystem zusammengesetzt ist. Dieses Baukastensystem bzw. der Förderer besteht im wesentlichen aus den Längsträgern, die im Ausführungsbeispiel als Alu-Hohlprofile 4 und 5 ausgebildet sind. Diese Alu-Hohlprofile 4 und 5 sind seitlich an Querrahmenelementen 6 angeschraubt, die aus gekanteten Blechteilen bestehen. Die Querrahmenelemente haben angeformte Beine 6a, an denen höhenverstellbare Füße 6b angeordnet sind.

In den Alu-Hohlprofilen 4 und 5 sind in engem Achsabstand Tragrollen 7 gelagert, wie später noch näher beschrieben wird. Alle im Zusammenhang der Figur 1 beschriebenen Bauteile sind leicht lösbar miteinander verbunden und baukastenartig austauschbar. So können zum Beispiel die Querrahmenelemente gegen andere Querrahmenelemente anderer Breite ausgetauscht werden, wenn eine größere Fördererbreite gewünscht ist. Die Alu-Hohlprofile 4 und 5 können gegen solche ausgetauscht werden, die andere Achsabstände der Tragrollen aufweisen oder in erfindungsgemäßer Weise gedreht werden, um Traggurte gleitend abzutragen.

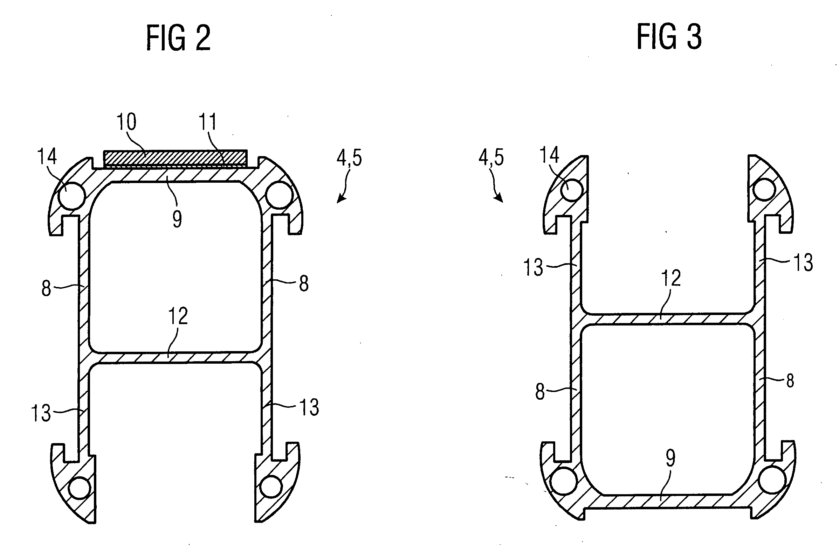

Die zuletzt beschriebene Möglichkeit ist am besten in Figur 2 erkennbar. Dort ist ein Querschnitt durch ein Alu-Hohlprofil 4, 5 der Erfindung dargestellt. Erkennbar ist das Profil im wesentlichen H-förmig ausgebildet, wobei die oberen, das große H bildenden Schenkel 8 in ihren Endbereichen durch ein Querschott 9 miteinander verbunden sind, auf dem der bei 10 angedeutete Traggurt unter Zwischenschaltung eines Gleitbleches 11 abgestützt ist. Die auf der anderen Seite des Steges 12 des H-förmigen Alu-Hohlprofils sich erstreckenden Schenkel 13 sind nach außen nicht geschlossen, zwischen ihnen werden, wie später noch erläutert wird, die Tragrollen eingesetzt. Dazu wird das Alu-Hohlprofil um 180° gedreht, wie es in Figur 3 dargestellt ist. Dort sind gleiche Teile gleich bezeichnet. Mit 14 sind in den Figuren 2 und 3 sich längs des Alu-Hohlprofils erstreckende Bohrungen bezeichnet, in denen Befestigungs- oder Zentrierelemente zum Zusammenfügen benachbarter Förderer einbringbar sind.

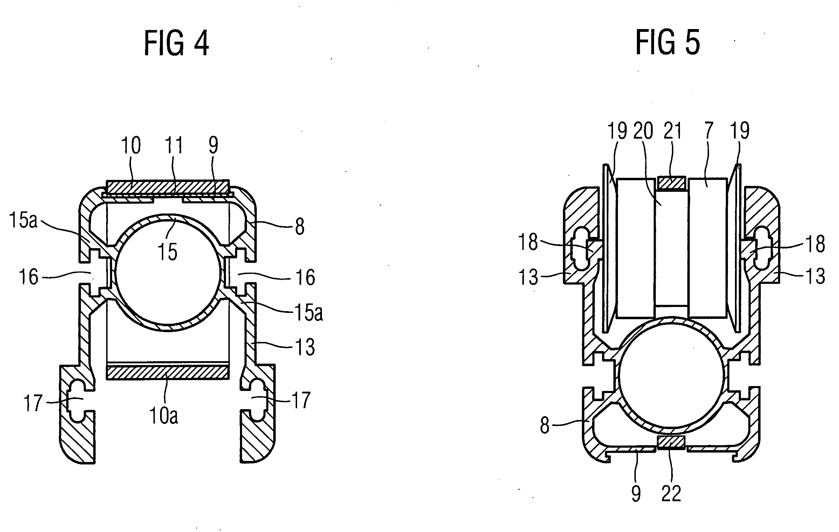

Wie in Figur 4 erkennbar, kann der Querschnitt des Alu-Hohlprofils vielfältig gestaltet sein. In Figur 4 ist zur Versteifung des Alu-Hohlprofils ein in Längsrichtung verlaufender Rohrprofilquerschnitt 15 erkennbar, gegen den sich die Seitenwände 8 und 13 des H-förmigen Querschnitts über Rippen 15a abstützen. Im Bereich seitlich des Rohrquerschnitts 15 sind in den Seitenwänden 8 und 13 Befestigungsnuten 16 vorgesehen, mit denen die Alu-Hohlprofile an den Querrahmenelementen, vorzugsweise mit Hilfe von Hammerkopfschrauben, anschraubbar sind. Im oberen Rereich der Figur 4 ist ein Traggurt bei 10 im Querschnitt erkennbar, dessen Untertrum innerhalb des Alu-Hohlprofils, wie bei 10a gekennzeichnet, rückführbar ist. Zwischen dem Traggurt 10 und dem Querschott 9 ist das Gleitblech 11 erkennbar, auf dem der Traggurt gleitet. Im unteren Bereich der Schenkel 13 des H-Profils sind Aufnahmenuten 17 erkennbar, in denen Achsen der Tragrollen beidseitig lagerbar sind.

Die Lagerung der Tragrollen 7 kann man besser in Figur 5 erkennen, wo man auch die Enden der die Tragrolle lagernden Achse 18 sehen kann. Erkennbar wurde das in Figur 4 dargestellte Alu-Hohlprofil um 180° um seine Längsachse gedreht, so dass nun die rohrförmige Querversteifung unterhalb der Tragrolle liegt, die zwischen den Schenkeln 13 gelagert ist. Die Tragrolle 7 ist beidseitig mit Spurkränzen 19 zur Führung von Stückgutträgern versehen, die Tragrolle 7 selbst ist im Zentrum mit einer Umfangsnut 20 versehen, in der ein Transmissionsriemen 21 geführt ist, mit dem die Tragrollen über den (hier nicht dargestellten) Antrieb antreibbar sind. Die Rückführung des Transmissionsriemens 21 im Untertrum erfolgt bei 22, wo das Querschott 9 eine Durchlassöffnung für den Transmissionsriemen 22 aufweist.

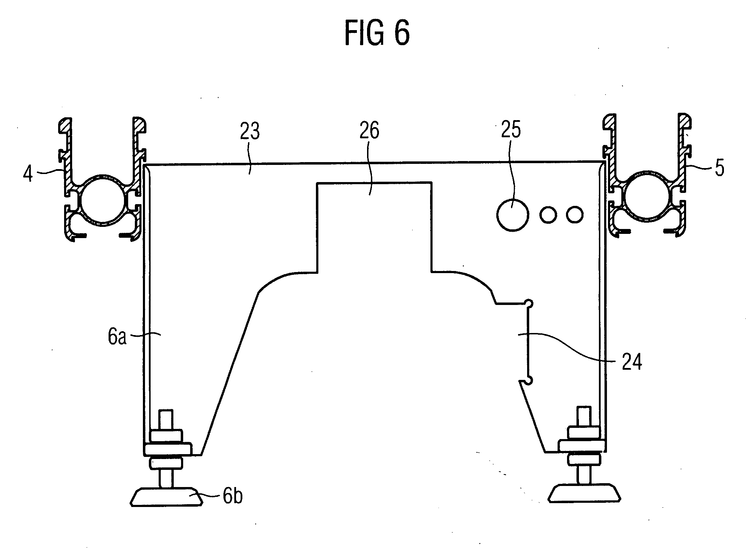

Figur 6 zeigt in einem schematischen Querschnitt die Anordnung der beiden Alu-Hohlprofile 4 und 5 an dem Querrahmenelement 23, das aus einem abgekanteten Blech geformt ist. Das Querrahmenelement 23 hat fluchtend mit (in Richtung senkrecht zur Zeichnungsebene gesehen) benachbarten Querrahmenelementen 23 Ausnehmungen 24 im Blech, in die ein Kabelkanal einsetzbar ist, sowie Durchbrüche 25 für Installationen, Aufnahmen für Schaltboxen 26 und an den Beinen 6a höhenverstellbare Stützfüße 6b. Die Alu-Hohlprofile 4 und 5 werden an die abgekanteten Blechteile des Querrahmenelementes 23 (in nicht dargestellter Weise) angeschraubt. Die Alu-Hohlprofile 4 und 5 sind symmetrisch und können beidseitig und auch um 180° gedreht angebaut werden.

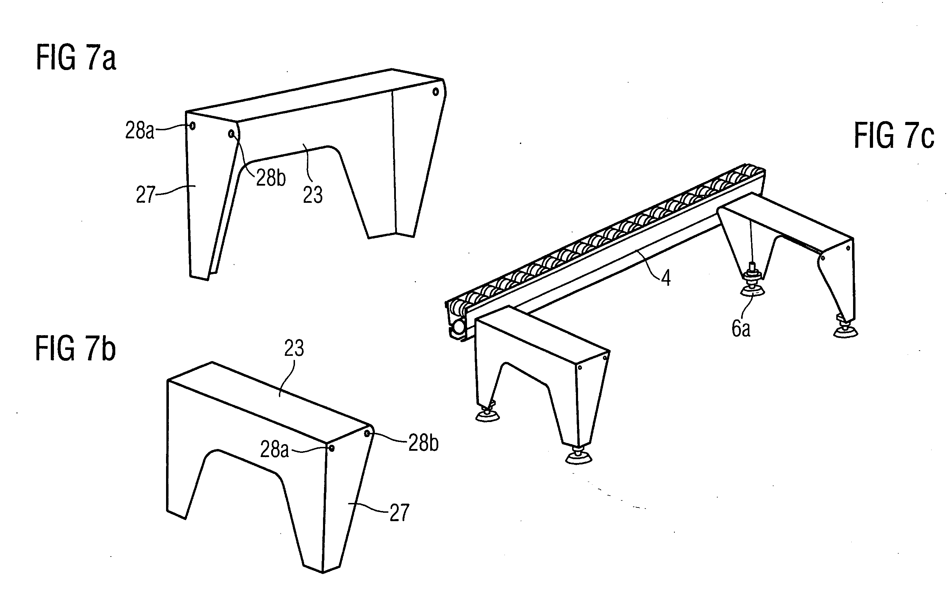

In den Figuren 7a - 7c sind die erfindungsgemäßen Querrahmenteile in perspektivischer Ansicht zu erkennen. Wie bereits ausgeführt, bestehen die Querrahmenelemente 22 aus abgekanteten Blechteilen, die seitlich bei 27 Anlageflächen für die Alu-Hohlprofile 4, 5 bilden und dort mit Bohrungen 28a und 28b für die Befestigungsschrauben dieser Alu-Hohlprofile.versehen sind. Günstigerweise werden dazu Hammerkopfschrauben verwendet, die in den längsverlaufenden T-Nuten 16 der Alu-Hohlprofile eingesetzt sind. Die Ausrichtung des Förderers erfolgt über die Stützfüße 6a.

Die Verwendung von zwei benachbarten Bohrungen 28a und 28b ermöglicht einen raumsparenden Transport des Förderers, wenn, wie die Erfindung vorschlägt, die Querrahmenelemente 23 in eine Richtung geklappt werden, in der die Stützbeine 6a parallel zu den Alu-Hohlprofilen 4,5 positioniert sind. Dazu wird vorzugsweise auf jeder Seite eines Querrahmenelementes 23 nur eine Befestigungsschraube etwa bei 28a eingedreht, um die das Querrahmenelement 23 verschwenkbar ist. Sobald der Förderer aufgestellt werden soll, wird durch Zurückschwenken des Querrahmenelementes 23 um die beiden beidseitig vorgesehenen Schrauben in den Bohrungen 28a das Querrahmenelement 23 in die aufrechte Betriebsposition gebracht, wo die zweite Schraube zum Fixieren in dieser Lage in die Bohrung 28b eingebracht und festgezogen wird. Durch Befestigung beider Schrauben in den Bohrungen 28a und 28b entsteht ein sehr stabiler Fördererrahmen.

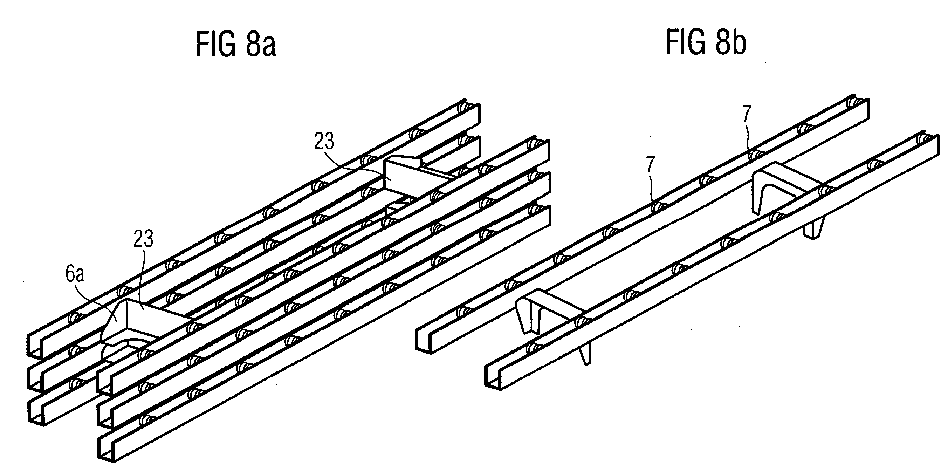

Der Förderer ist in Figur 8a in Transportstellung gezeigt, wo drei Fördererelemente übereinander gestapelt dargestellt sind. Die Betriebsstellung des Förderers ist in Figur 8b dargestellt. Erkennbar ist hier auch ein relativ großer Abstand der Tragrollen 7, was darauf deutet, dass mit diesem Förderer ein Lastträger in Längsrichtung transportiert wird, beispielsweise ein Skid.

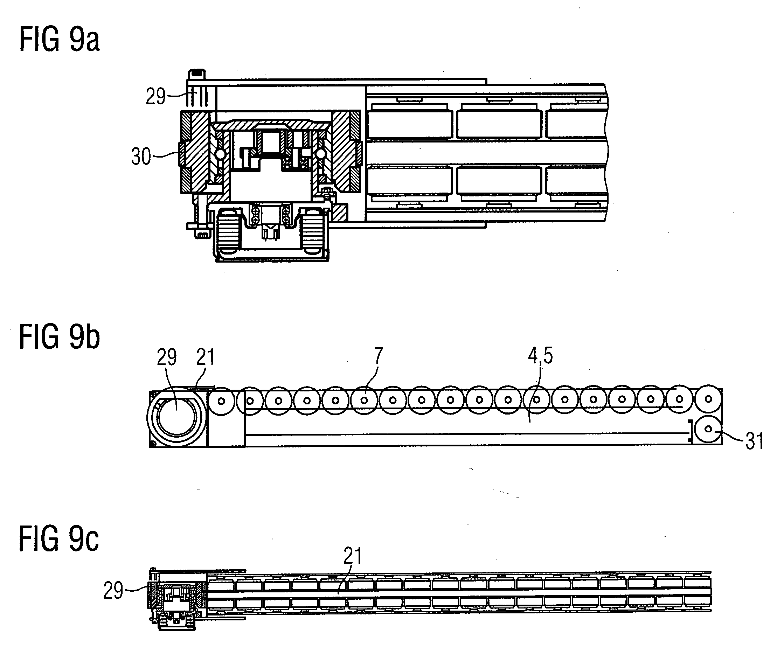

Ein weiterer Vorteil der Erfindung ist in den Figuren 9a - c dargestellt. In den Figuren 9b und 9c ist, jeweils in der Seitenansicht und in der Draufsicht, ein Alu-Hohlprofil 4, 5 mit darin gelagerten Tragrollen 7 isoliert dargestellt, die alle über einen gemeinsamen, als Zahnriemen 30 ausgebildeten Transmissionsriemen 21 von einem Integralantrieb 29 angetrieben werden. Dieser ist als Trommelmotor ausgebildet (Figur 9a), um den der Zahnriemen 30 zur Übertragung des Antriebsmomentes geführt ist. Am entgegengesetzten Ende der aus den Tragrollen 7 und dem Alu-Hohlprofil 4, 5 gebildeten Rollenleiste ist unterhalb der Tragebene eine Umlenkrolle 31 verschwenk- oder verschiebbar vorgesehen, mit deren Hilfe der Transmissionsriemen 30 spannbar ist.

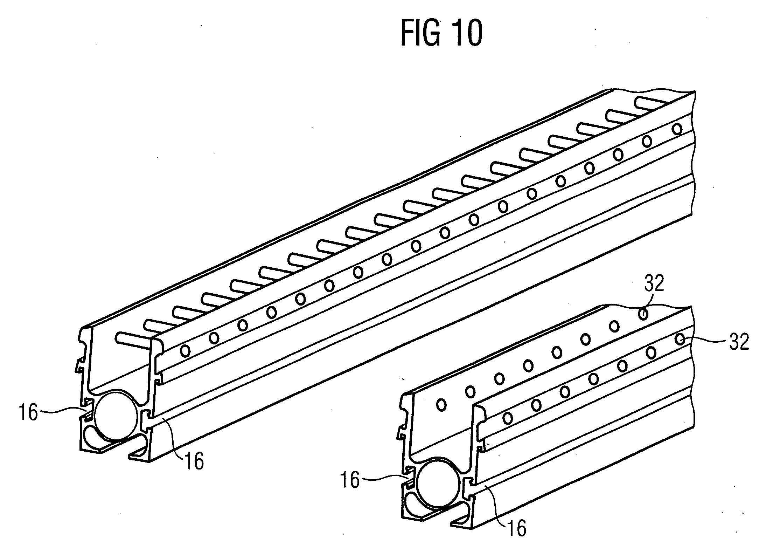

In Figur 10 schließlich ist noch einmal ein erfindungsgemäßer H-förmiger Alu-Hohlprofil-Abschnitt dreidimensional dargestellt. Erkennbar sind in der unteren Profildarstellung die vorbereiteten Bohrungen 32, die später die Achsen der Tragrollen 7 aufnehmen. In der oberen Darstellung sind diese Achsen in die Bohrungen 32 eingesteckt dargestellt, auf ihnen drehen sich die Tragrollen 7. Erkennbar sind auch die längs des Alu-Hohlprofils verlaufenden T-Nuten 16 zur Befestigung der Alu-Hohlprofile an den Querrahmenelementen 23, aber auch zur Befestigung von Anbauteilen, wie Initiatoren, Schaltkästen usw.

## Patentansprüche

1. Baukastensystem für einen Förderer (1) zum Längs- oder Querfördern von Stückgutträgern wie Paletten, Skids oder dergl. mit seitlichen Längsträgern, mit die Längsträger verbindenden Querrahmenelementen (23) mit Stützfüssen (6b) und mit angetriebenen lastabtragenden Fördermitteln für die Stückgutträger, **dadurch gekennzeichnet, dass** der die Fördermittel aufnehmende Längsträger jeweils ein lösbar mit dem Querrahmenelement (23) verbindbares verwindungssteifes Aluminium- oder Kunststoff-Hohlprofil (4,5) ist, dass zur wahlweisen Aufnahme von angetriebenen Tragrollen (7) oder von einlegbaren Gleitblechen (11) für einen Traggurt (10) ausgebildet ist.

2. Baukastensystem nach Anspruch 1, **dadurch gekennzeichnet, dass** das Aluminium- oder Kunststoff-Hohlprofil (4,5) an einer seiner Längsseiten zur Aufnahme der Tragrollen (7) offen ist und auf der gegenüberliegenden Längsseite zur Bildung einer Auflage für das Gleitblech (11) weitgehend geschlossen ist und dass durch Drehung des Aluminium- oder Kunststoff-Hohlprofil (4,5) um 180° um seine Längsachse die für den jeweils erforderlichen Zweck benötigte Seite in Gebrauchslage mit dem Querrahmenelement (23) verbindbar ist.

3. Baukastensystem nach Anspruch 1 und 2, **dadurch gekennzeichnet, dass** das Aluminium- oder Kunststoff-Hohlprofil (4,5) im Querschnitt H-förmig ausgebildet ist, wobei die Tragrollen (7) zwischen den Schenkeln (8) des H-förmigen Querschnittes gelagert sind und die gegenüberliegenden Schenkel (13) des H-förmigen Querschnittes in ihrem Endbereich durch ein Querschott (9) verschlossen sind, das die Auflage für das Gleitblech (11) bildet und dass das Aluminium- oder Kunststoff-Hohlprofil (4,5) symmetrisch ausgebildet ist.

4. Baukastensystem nach Anspruch 3, **dadurch gekennzeichnet, dass** der Bereich zwischen dem Querschott (9) und dem Steg (12) des im Querschnitt H-förmigen Aluminium- oder Kunststoff-Hohlprofil (4,5) eine zusätzliche Querversteifung (15) enthält.

5. Baukastensystem nach Anspruch 3 und 4, **dadurch gekennzeichnet, dass** die Querversteifung (15) durch ein in Längsrichtung des Aluminium- oder Kunststoff-Hohlprofils (4,5) verlaufendes Rohrprofil gebildet wird, gegen das sich die Innenseiten der Schenkel (8) des Aluminium- oder Kunststoff-Hohlprofils (4,5) abstützen.

6. Baukastensystem nach Anspruch 3 bis 5, **dadurch gekennzeichnet, dass** das Aluminium- oder Kunststoff-Hohlprofil (4,5) und dessen Querversteifungen (15) aus einem Strangpressprofil gebildet werden.

7. Baukastensystem nach Anspruch 3 bis 6, **dadurch gekennzeichnet, dass** mindestens in den querversteiften, sich gegenüberliegenden Seitenbereichen des Aluminiumoder Kunststoff-Hohlprofils (4,5) T-Nuten (16) für Befestigungsmittel vorgesehen sind, mit denen die Aluminium- oder Kunststoff-Hohlprofile (4,5) mit dem Querrahmenelement (23) verbindbar ist.

8. Baukastensystem nach Anspruch 1 bis 7, **dadurch gekennzeichnet, dass** das Aluminium- oder Kunststoff-Hohlprofil (4,5) als Rollenleiste mit eingesetzten Tragrollen (7) vorgefertigt montierbar ist.

9. Baukastensystem nach Anspruch 8, **dadurch gekennzeichnet, dass** die Rollenleiste im Bereich der Tragrollen (7) mit einer Abdeckplatte verschließbar ist, die mit von Segmenten der Tragrollen (7) durchdringbaren Ausnehmungen versehen ist.

10. Baukastensystem nach einem oder mehreren der Ansprüche 1 bis 9, **dadurch gekennzeichnet, dass** die Tragrollen (7) aus einem abgelängten rohrförmig ausgebildeten Aluminium- oder Kunststoff-Strangpreßprofil gebildet sind, in das beidseitig Naben zur Aufnahme der Tragrollenlagerung einpressbar sind.

11. Baukastensystem nach Anspruch 10, **dadurch gekennzeichnet, dass** an den Naben der Tragrollen (7) Spurkränze (19) zur Führung der Stückgutträger angeformt sind.

12. Baukastensystem nach einem oder mehreren der Ansprüche 1 bis 11, **dadurch gekennzeichnet, dass** die Tragrollen (7) zentral umlaufend genutet sind und in der Nut (20) ein für alle Tragrollen (7) einer Rollenleiste gemeinsamer Transmissionsriemen (21) geführt ist.

13. Baukastensystem nach Anspruch 12, **dadurch gekennzeichnet, dass** der Transmissionsriemen (21) ein Zahnriemen (30) ist und die Tragrollen (7) in Abtragbereich des Transmissionsriemens (21) mit entsprechend gezahnter Umfangsfläche versehen sind.

14. Baukastensystem nach einem oder mehreren der Ansprüche 1 bis 13, **dadurch gekennzeichnet, dass** alle Tragrollen (7) einer Rollenleiste von einem Transportriemen umlaufen werden, der auf den Tragrollen (7) aufliegend den Stückgutträger fördert.

15. Baukastensystem nach einem oder mehreren der Ansprüche 1 bis 14, **dadurch gekennzeichnet, dass** die Querrahmenelemente (23) aus einem abgewinkelten Kantblech mit angeformten Stützbeinen (6a) geformt sind, an das beidseitig die Aluminium- oder Kunststoff-Hohlprofil (4,5) anschraubbar sind.

16. Baukastensystem nach Anspruch 15, **dadurch gekennzeichnet, dass** die die Stützbeinen (6a) der Querrahmenelemente (23) bodenseitig mit höhenjustierbaren Stützfüssen (6b) versehen sind.

17. Baukastensystem nach einem oder mehreren der Ansprüche 1 bis 16, **dadurch gekennzeichnet, dass** die Querrahmenelemente (23) in Förderrichtung der Stückgutträger mit Ausnehmungen (24, 25) versehen sind, in die längs des Förderers (1) verlaufende Kabelkanäle einsetzbar sind.

18. Baukastensystem nach Anspruch 17, **dadurch gekennzeichnet, dass** an die Querrahmenelemente (23) Verlagerungen (26) für Steuerungs-Boxen angeformt sind.

19. Baukastensystem nach einem oder mehreren der Ansprüche 1 bis 18, **dadurch gekennzeichnet, dass** die Querrahmenelemente (23) zum Transport der vorzugsweise kurzen Fördererabschnitte um je eine der Befestigungsschrauben um 90° in die Längsebene der beidseitigen Aluminium- oder Kunststoff-Hohlprofile (4,5) verschwenkbar sind und nach Zurückschwenken und Festschrauben der Aluminium- oder Kunststoff-Hohlprofile (4,5) an den Querrahmenelementen (23) mit mindestens einer weiteren Befestigungsschraube in der Betriebsstellung festlegbar sind.

20. Baukastensystem nach einem oder mehreren der Ansprüche 1 bis 19, **dadurch gekennzeichnet, dass** jeder modular aufgebaute Förderer (1) aus mindestens zwei Aluminiumoder Kunststoff-Hohlprofilen (4,5) mit Gleitblechen (11) oder Rollenleisten, mindestens einem Querrahmenelement (23), mindestens einem Antriebsmodul und mindestens zwei Transport- oder Transmissionsriemen (21, 30) besteht.

21. Baukastensystem nach Anspruch 20, **dadurch gekennzeichnet, dass** der Antrieb für die Fördermittel als Integralantrieb (29) ausgebildet ist.

22. Baukastensystem nach Anspruch 21, **dadurch gekennzeichnet, dass** der Integralantrieb (29) ein Trommelmotor ist.

23. Baukastensystem nach einem oder mehreren der Ansprüche 1 bis 22, **dadurch gekennzeichnet, dass** eine Umlenkrolle (31) für den Transport- oder Transmissionsriemen (21, 30) am Ende des Aluminium- oder Kunststoff-Hohlprofils (4,5) unterhalb der Transportebene angeordnet ist und durch Verschwenken oder Verschieben in Förderrichtung zum Spannen des Transport- oder Transmissionsriemens (21, 30) verwendbar ist.

24. Baukastensystem nach einem oder mehreren der Ansprüche 1 bis 23, **dadurch gekennzeichnet, dass** die Rollenleisten der Aluminium- oder Kunststoff-Hohlprofile (4,5) mit in Abhängigkeit von den unterschiedlichen Verwendungszwecken unterschiedlichen Achsabständen positionierten Tragrollen (7) vorgefertigt sind.
